# EUROPÄISCHE PATENTANMELDUNG

(11) **EP 1 561 659 A1**
(43) Veröffentlichungstag der Anmeldung: **10.08.2005**
(21) Anmeldenummer: 04024355.2
(22) Anmeldetag: 13.10.2004
(51) Int. Cl.: B60S 5/06, B60R 16/04, F41H 7/02

(54) **Vorrichtung zum Austauschen einer Batterie für ein Fahrzeug, insbesondere gepanzertes Transportfahrzeug**

(30) Priorität: 07.02.2004 DE 202004001879 U
(71) Anmelder: Rheinmetall Landsysteme GmbH, 24159 Kiel (DE)
(72) Erfinder: Hass, Frank, 24235 Wendtorf (DE); Tiessen, Dierk, 24211 Preetz (DE); Witt, Tino, 24107 Kiel (DE); Wolff, Achim, 24576 Hagen (DE)
(74) Vertreter: Dietrich, Barbara, Dipl.-Ing.

(57) **Zusammenfassung**

Für eine Variante eines gepanzerten Transportfahrzeugs wird vorgeschlagen, Zusatzbatterien (2) für die elektrische Versorgung mittels eines Verschiebe- und Hebemechanismus aus der Radschulter herauszuheben, womit die Zugänglichkeit und Wartung der Batterien (2) verbessert wird./.

## Beschreibung

Die Erfindung bezieht sich auf ein gepanzertes Fahrzeug, das sich aus den üblichen Teilen wie Antriebsmotor, Getrieben, Radsätzen oder Kettenlaufwerk, einem Besatzungsraum und einem Gehäuse, das alle Ein- und Anbauten aufnimmt, zusammensetzt. Insbesondere bei einem Schützenkampffahrzeug werden mit dem Fahrzeug mehrere Soldaten transportiert, die schnell über eine Heckklappe aussteigen oder aufsitzen können.

Bei einem anderen Fahrzeugtyp, dem gepanzerten Transport-Kraftfahrzeug, abgekürzt GTK, wird das Fahrzeug in Module eingeteilt und ein sogenanntes Missionsmodul austauschbar auf dem Chassis oder Fahrmodul untergebracht. Verschiedene Bewaffnungen und Ausrüstungen können dann als Modul austauschbar auf dem Fahrzeug wechselweise mitgeführt werden. Bei einer Fahrzeugvariante wird ein Führungsfahrzeug dargestellt, bei dem mehrere Soldaten im Fahrzeug an Datengeräten tätig werden und das Fahrzeug einen erhöhten elektrischen Energiebedarf hat. Alle diese Fahrzeuge besitzen eine elektrische Energieerzeugungs- und Speicheranlage, da Geräte und Fremdkrafteinrichtungen heute aus verschiedenen Gründen fast ausschließlich mit elektrischer Energie betrieben werden. Dazu gehören auch Batterien für die entsprechende Energiespeicherung.

Nach dem Stand der Technik sind verschiedene Vorschläge zum Aufbau von Fahrzeugen und zu gepanzerten Transportfahrzeugen gemacht worden.

In der DE 101 44 368 A1 wird eine Vorrichtung für ein gepanzertes Transportfahrzeug als Batterie-Schwenkmechanismus beschrieben und auf die Bezug genommen wird, bei der Zusatzbatterien mittels eines Schwenkmechanismus aus der Radschulter herausgehoben werden und die Zugänglichkeit und Wartung verbessert wird.

Bei einem Führungsfahrzeug für eine hochbewegliche Truppe, bei der die schnelle Verlegung von einem Einsatzort zu einem anderen ein besonderes Missionskennzeichen ist, müssen eine Vielzahl von Kommunikationsgeräten und -einrichtungen zur Erfüllung der Führungsaufgabe auf einem Fahrzeug untergebracht sein. Dafür wird auch mehr elektrischer Strom auf dem Fahrzeug benötigt, so dass aufladbare Zusatzbatterien zusätzlich zu der vorhandenen Fahrzeugbatterieanlage eingebaut werden. Diese Zusatzbatterien werden häufig in dem Gehäuseteil des Fahrzeugs, welcher oberhalb der Radsätze oder des Kettentrumms liegt, untergebracht. Dieser Teil wird auch Rad- oder Kettenschulter genannt. Damit ist die Zugänglichkeit der Batterie nach Öffnen von zum Beispiel einer Wartungsklappe prinzipiell gut, da sie ganz außen und oben und nicht versteckt im Fahrzeug eingebaut ist. Es stört jedoch, dass für die Ausführung von Wartungsarbeiten an der Batterie besondere Maßnahmen und Hilfsmittel erforderlich sind. Die Batterien mit einem Gewicht von zum Beispiel 4 mal 40kg sind schwer und müssen manuell von zwei Personen entnommen werden.

Aufgabe ist es, eine verbesserte Vorrichtung für die Wartung und Bedienung für eine Fahrzeugbatterie herzustellen, die die Zugänglichkeit zur Batterie und das Handling ohne besondere Hilfsmittel für das Wartungspersonal ermöglicht.

Diese Aufgabe wird durch die kennzeichnenden Merkmale des Anspruchs 1 gelöst. Weitere Merkmale ergeben sich aus den Unteransprüchen.

Die Erfindung besteht aus einer horizontal herausziehbaren Halterung und zwei ausklappbaren Auslegern mit Flaschenzügen. Im Normalfall werden die Batterien in der Instandsetzungshalle mit Hilfe der ausziehbaren Halterung aus der Radschulter gezogen und dann mit Hilfe eines Hallenkrans angehoben (4 Batterien zu je 40 kg Gewicht). Sollte das Wechseln der Batterien im Einsatz ohne Fremdhilfe notwendig sein, werden die Ausleger per Hand herausgeschwenkt, die Flaschenzüge eingehängt und die Batterien mit deren Hilfe angehoben. Dann kann die Schienenhalterung eingeschoben und die Batterien abgesenkt werden.

Es wird ein Batteriekasten oder -trog mittels eines Schwenkarms bewegt, auf Schienen nach außen verfahren und mittels Hebezeug angehoben und nach unten abgelassen. Um die in der hochliegenden Radschulter von außen zugänglichen Zusatzbatterien ergonomisch günstig entnehmen zu können, wird für die Batterieverstauung ein Verfahrmechanismus vorgesehen, der es erlaubt, die Batterien seitlich aus der Radschulter heraus zu befördern und nach unten abzulassen.

Die Vorteile der Erfindung liegen darin, dass nach Ausschwenken die Batterien auf eine niedrige Arbeitshöhe kommen, so dass ein Bediener ohne Hilfsmittel daneben stehen und die Wartung vornehmen kann. Batterien sind schwer. Auch der Einsatz eines Elektrokarrens zur Batterieentnahme und -transport wird durch die nach außen verbrachten Batterien sehr vereinfacht.

Ausführungsbeispiele sind in den Zeichnungen schematisch dargestellt und werden im folgenden näher beschrieben. Es zeigen:
- Figur 1:: Schnittansicht Fahrzeug mit Batterie
- Figur 2:: Schnittansicht aus Fig. 1 mit Schwenkarm geschwenkt
- Figur 3:: Schnittansicht aus Fig. 1 mit Batterien ausgefahren und Hebezeug angeschlagen
- Figur 4:: Schnittansicht aus Fig. 1 mit Schienen eingefahren
- Figur 5:: Schnittansicht aus Fig. 1 mit Batterien abgelassen

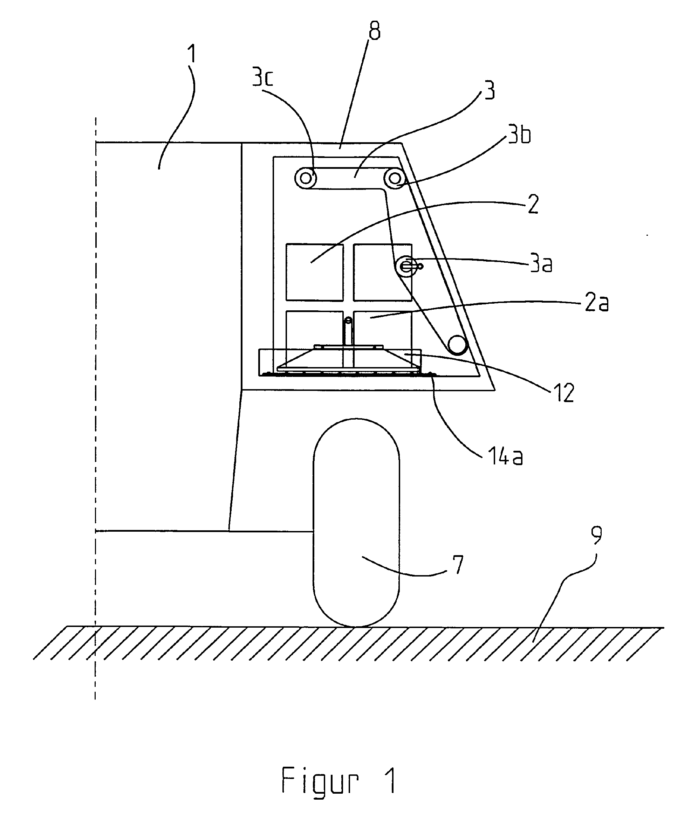

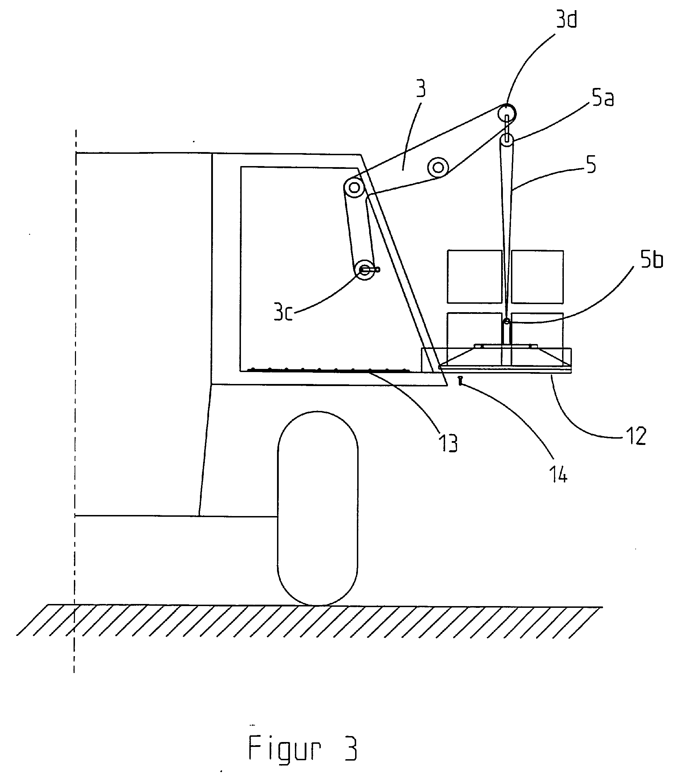

Figur 1 zeigt ein halbseitig und im Querschnitt dargestelltes Fahrzeug 1 mit Rad 7 und Radschulter 8, in welche Batterien 2 in einem Batteriekasten 2a (Batteriesatz) in Längsrichtung des Fahrzeugs 1 eingebaut sind. Ein Verschiebe-/ Schwenkmechanismus zwischen Fahrzeug 1 und Batteriekasten 2a mit paarweise vorhandenem Schwenkarm bzw. Hebel 3 besitzt eine fahrzeugfeste Drehlagerung 3b und eine Verriegelung ( Auge) 3a mit dem Batteriekasten 2a, wobei zum Beispiel eine Stange durch eine Bohrung durchgesteckt ist für die Verriegelung des Batteriekastens 2a im Fahrzeug 1. Der Batteriekasten 2a steht auf in Fahrzeuglängsrichtung paarweisen Schienen 12, welche nach außen verschoben werden können, wie in Fig.3 dargestellt.

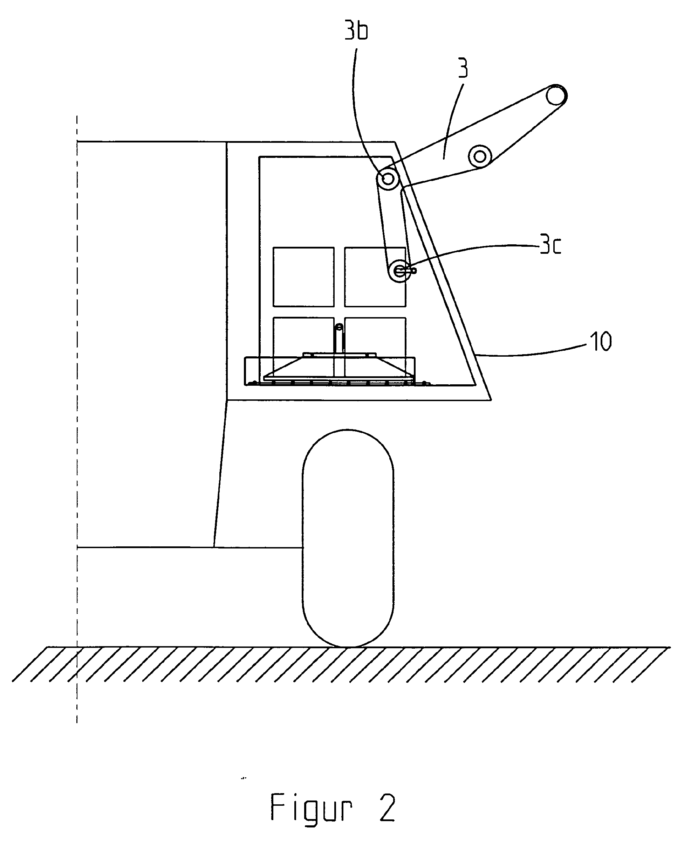

In Figur 2 ist der Schwenkarm 3 in eine Funktionsstellung ausgeschwenkt und mittels einer Bohrung (Auge) 3c im Schwenkarm 3 ist der Schwenkarm 3 am Fahrzeug 1 arretiert in seiner Lage als Kranarm. Die Gehäuseaußenwand 10 ist vorzugsweise durchbrochen, damit der Hebel 3 nach außen geschwenkt werden kann.

In Figur 3 ist der Batteriekasten 2 a mit den Schienen 12 nach außen verfahren und ein Hebezug 5, hier ein Flaschenzug, ist mit einem Ende 5a in einem weiteren Auge 3d des Schwenkarms 3 angeschlagen und mit seinem anderen Ende 5b ebenfalls am Batteriekasten 2a angeschlagen. Der Batteriekasten 2a wird dabei auf einer Kugelbahn 13 leichtgängig verschiebbar gehalten.

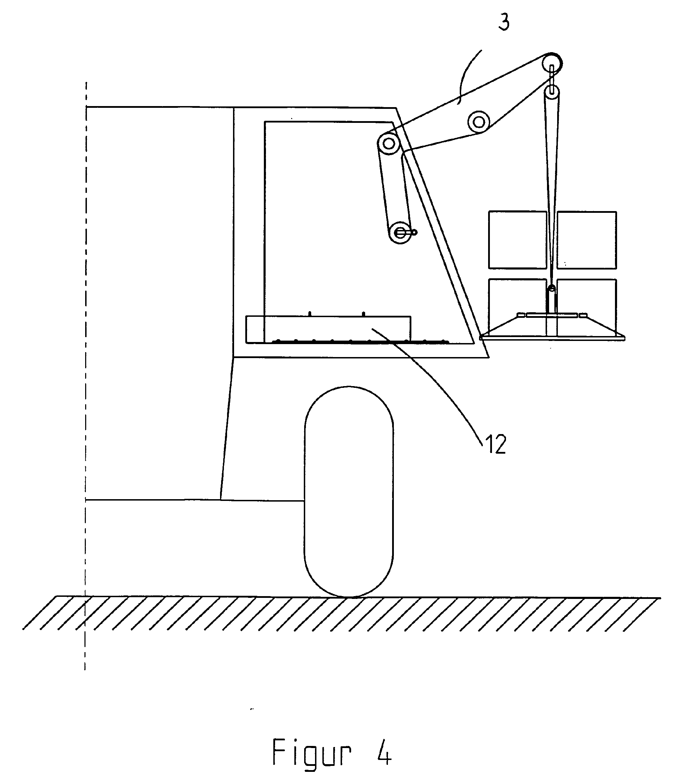

In Figur 4 sind die Schienen 12 zurück in ihre fahrzeuginnere Lage verfahren.

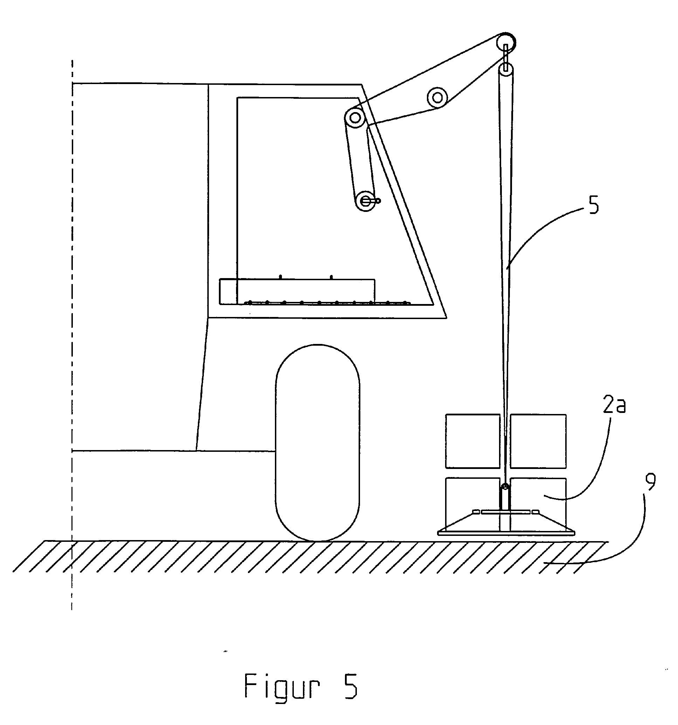

In Figur 5 ist der Batteriekasten 2a mittels Hebezeug 5 bis auf einen Abstellplatz 9, hier einem Boden, abgesenkt.

Der Verschiebe- und Hebemechanismus wird im wesentlichen durch die mit den Bezugszeichen 3, 3a, 3b, 3d, 12 versehenen Baugruppen / Teilen gebildet.

In der Normalstellung sind die Batterien 2 im Batteriekasten 2a auf ihren Führungsschienen 12 in der Radschulter 8 gelagert und werden von einer Verriegelung 14 zwischen Batteriekasten 2a und Kugelbahn 13 an Position 14a mit dem Fahrzeuggehäuse 1 verriegelt, wobei der Hebel 3 nach innen verschwenkt ist und ebenfalls in seiner Lage arretiert ist.
Für beispielsweise die Wartung der Batterien 2 wird zunächst der Hebel 3 um das Lager 3b nach außen geschwenkt und mit dem Fahrzeuggehäuse 10 mittels Bolzen und Bohrung 3c verriegelt, sowie die Verriegelung 14 in Position 14a gelöst (Fig. 2).
Anschließend wird der Batteriesatz 2a mittels Schienen 12 auf einer Kugelbahn 13 nach außen verfahren und das Hebezeug 5, welches mitführbar ist, an der Bohrung 3d des Hebels 3 und am Batteriesatz 2a am Ende 5b angeschlagen (Fig.3).
Mittels Hebezeug 5 wird der Batteriesatz 2a etwas angehoben und die Schienen 12 zurück in die Radschulter 8 geschoben (Fig.4).
Anschließend wird der Batteriesatz 2a mittels Hebezeug 5 nach unten bis auf den Boden 9 abgelassen. Anschließend kann derselbe oder ein anderer Batteriesatz in umgekehrter Reihenfolge aufgenommen und ins Fahrzeug 1 gebracht werden.

Der Verschiebe- und Hebemechanismus ist feder-, auch gasfederunterstützt zur Vermeidung von größerem Bedienerkräftebedarf bei Aus- oder Einfahren der Schienen 12 oder des Hebels 3 ausgeführt. Der Verschiebe- und Hebemechanismus kann auch fremdkraftbetrieben oder bedienerbetätigt ausgeführt sein. Der Verschiebe- und Hebemechanismus übernimmt in der nicht ausgeschwenkten Position des Hebels 3 im Fahrzeug 1 vorzugsweise zusätzlich die Funktion einer Transportverriegelung und Zurrung für den Fahrbetrieb, womit der Batteriekasten 2a in seiner Lage im Fahrzeug 1 festgehalten und verzurrt wird

Vorzugsweise durch eine aufklappbare Tür in der äußeren Gehäusewand 10 des Fahrzeugs 1 wird den Zugang zum Innern der Rad -oder Kettenschulter 8 und zum Batteriekasten 2a und der Zusatzbatterie 2 nach Öffnen der Tür ermöglicht.

Es versteht sich, dass im Rahmen des Lösungsgedankens Änderungen möglich sind. So kann die Batterie 2 auch ohne Batteriekasten 2a in der Rad- oder Kettenschulter 8 eingebunden sein kann.

## Patentansprüche

1. Vorrichtung für ein Fahrzeug (1), insbesondere ein gepanzertes Transportfahrzeug, mit einem Radfahr- oder Kettenlaufwerk, einem Antrieb zur Fortbewegung sowie einem Fahrzeugaufbau zur Aufnahme und zum Einbau aller Komponenten für den Betrieb des Fahrzeugs (1), einer Stromversorgungsanlage für die Komponentenversorgung sowie wenigstens einer Zusatzbatterie (2) auf der Rad- oder Kettenschulter (8) im Fahrzeug (1), **dadurch gekennzeichnet, dass** ein die Zusatzbatterien (2) aufnehmender Batteriekasten (2a) oder die Zusatzbatterie (2) mittels eines ebenfalls auf der Rad- oder Kettenschulter (8) untergebrachten Verschiebe- und Hebemechanismus auf verschiebbaren Schienen (12) gelagert ist und mittels dieser Schienen (12) und einem drehbar gelagertem Hebel (3) und daran angebrachtem Hebezeug (5) nach außen aus dem Fahrzeug (1) und nach unten auf einen Abstellplatz (9) verbracht wird.

2. Vorrichtung nach Anspruch 1, **dadurch gekennzeichnet, dass** der Verschiebe- und Hebemechanismus aus paarweise an den Enden des Batteriekastens (2a) oder der Zusatzbatterie (2) und in Fahrtrichtung hintereinander angeordneten Hebeln (3) besteht, die jeweils ein fahrzeugfestes (3b) Drehgelenk sowie weitere Augen (3a, 3c, 3d) zur fallweisen temporären Befestigung besitzen, und aus paarweise verschiebbaren Schienen (12) besteht, womit der Batteriekasten (2a) und / oder die Zusatzbatterie (2) seitlich aus dem Fahrzeug (1) geschoben werden kann.

3. Vorrichtung nach Anspruch 1 und 2, **dadurch gekennzeichnet, dass** an den Hebel (3) ein Hebezeug (5) mit einem Ende (5a) im Auge (3d) und mit seinem anderen Ende (5b) am Batteriekasten (2a) und / oder der Zusatzbatterie (2) angeschlagen ist und diese nach Verriegelung des Hebels (3) gegen das Fahrzeuggehäuse (3c) abgesenkt oder angehoben werden.

4. Vorrichtung nach einem der oben genannten Ansprüche 1 bis 3, **dadurch gekennzeichnet, dass** der Verschiebe- und Hebemechanismus feder-, auch gasfederunterstützt ausgeführt ist zur Vermeidung von größerem Bedienerkräftebedarf bei Aus- oder Einfahren der Schienen (12) oder des Hebels (3).

5. Vorrichtung nach einem der oben genannten Ansprüche 1 bis 4, **dadurch gekennzeichnet, dass** der Verschiebe- und Hebemechanismus fremdkraftbetrieben oder bedienerbetätigt ausgeführt ist.

6. Vorrichtung nach einem der oben genannten Ansprüche 1 bis 5, **dadurch gekennzeichnet, dass** eine aufklappbare Tür in der äußeren Gehäusewand (10) des Fahrzeugs (1) den Zugang zum Innern der Rad -oder Kettenschulter (8) und zum Batteriekasten (2a) oder der Zusatzbatterie (2) nach Öffnen der Tür ermöglicht.

7. Vorrichtung nach einem der oben genannten Ansprüche 1 bis 6, **dadurch gekennzeichnet, dass** der Verschiebe- und Hebemechanismus in der nicht ausgeschwenkten Position des Hebels (3) im Fahrzeug (1) zusätzlich die Funktion einer Transportverriegelung und Zurrung für den Fahrbetrieb übernimmt, womit der Batteriekasten (2a) oder die Zusatzbatterie (2) in seiner Lage im Fahrzeug (1) festgehalten und verzurrt wird.
